# FASCICULE DE BREVET EUROPEEN

(11) **EP 2 994 218 B1**
(45) Date de publication et mention de la délivrance du brevet: **31.05.2017**
(21) Numéro de dépôt: 14729389.8
(22) Date de dépôt: 24.04.2014
(51) Int. Cl.: B01D 61/44, B01J 49/00, B01D 61/58, C02F 1/469, C13B 20/14, B01D 61/02, B01D 61/14

(54) **PROCEDE DE RECYCLAGE D'UN EFFLUENT DE REGENERATION COMPRENANT DES IONS CHLORURES**
VERFAHREN ZUR RÜCKFÜHRUNG EINER WIEDERVERARBEITUNGSFLÜSSIGKEIT MIT CHLORIDIONEN
METHOD FOR RECIRCULATING A REPROCESSING EFFLUENT CONTAINING CHLORIDE IONS

(30) Priorité: 07.05.2013 FR 1354198
(43) Date de publication de la demande: 16.03.2016
(73) Titulaire: Eurodia Industrie, 84120 Pertuis (FR)
(72) Inventeur: THEOLEYRE, Marc André, F-75020 Paris (FR); GONIN, Anne, F-13610 Le Puy St Reparade (FR); GUERIF, Gérard, F-84240 La Motte D'aigues (FR)
(74) Mandataire: Balesta, Pierre
(86) Numéro de dépôt international: PCT/FR2014/050997
(87) Numéro de publication internationale: WO 2014/181054

(56) Documents cités:
- FR-A1- 2 848 877
- GB-A- 1 432 020
- US-A1- 2010 116 663

## Description

### Arrière-plan de l'invention

La présente invention concerne le domaine technique des procédés de recyclage d'un effluent de régénération comprenant des ions chlorures, en particulier une saumure de régénération d'une résine échange d'ions anioniques destinée à la décoloration d'une solution sucrée colorée.

De préférence, l'effluent de régénération comprend une saumure de régénération et des colorants issus du traitement de la solution sucrée colorée. Ces colorants comprennent notamment des polyphénols.

Les résines échangeuses d'ions en particulier du type résines anioniques fortes sous forme chlorure sont largement utilisées pour décolorer les sirops c'est-à-dire les solutions comprenant un ou plusieurs sucres dans les raffineries de sucre. Les mécanismes de fixation des colorants sur les résines échangeuses d'ions sont multiples et notamment mettent en oeuvre l'échange d'ions entre certains colorants, ayant un caractère d'acide organique, et les ions chlorures de la résine échangeuse d'ions, ainsi que l'adsorption de colorants hydrophobes sur la matrice de la résine. Après saturation de la résine échangeuse d'ions, la régénération de cette résine est réalisée en percolant un volume d'eau salée d'une solution de sel à relativement haute concentration, en particulier à 100 g/l, à un pH compris entre 11 et 13. Cette solution de sel est également appelée saumure de régénération.

Plusieurs mécanismes entrent en jeu à la régénération de la résine échangeuse d'ions par la saumure de régénération, il se produit notamment un choc osmotique, l'eau interne des billes de résine sort des billes pour aller diluer la saumure de régénération. On observe également des échanges d'ions, une solvatation des colorants, une diminution de l'interaction hydrophobe matrice/colorants.

Seule une fraction minime des ions chlorures contenus dans la saumure de régénération c'est-à-dire de 5% à 10 % environ de la saumure de régénération mise en oeuvre, est effectivement échangée avec la résine par échange d'ions ou déplacement d'un équivalent colorant/acide organique de la solution sucrée colorée par un équivalent ion chlorure.

En sortie de la colonne comprenant la résine échangeuse d'ions, on trouve ainsi dans les éluas de régénération, également qualifiés d'effluents de régénération, environ 95 % des chlorures du sel mis en oeuvre pour la régénération.

Ces éluas sont plus dilués que la saumure de régénération initiale et éventuellement chargés en colorants. Il n'est ainsi pas possible de récupérer directement une saumure de régénération prête à l'emploi à partir de l'effluent de régénération du fait de la dilution des ions chlorures.

En effet, l'efficacité de la régénération dépend de la concentration en ions chlorures dans la saumure de régénération laquelle est de préférence autour de 100 g/l.

Ces effluents de régénération chargés en sel, et éventuellement en colorants, en particulier des polyphénols, sont très polluants car très difficiles à dégrader en l'état. Les colorants sont toutefois dégradables par un traitement biologique à condition d'avoir été séparés du sel.

Du fait de la différence de taille entre le sel, c'est-à-dire les ions chlorures, et les macromolécules que sont les colorants, la séparation de ces deux espèces par la mise en oeuvre de membrane de nanofiltration est assez aisée.

Un tel procédé a été mis en oeuvre à la sucrerie de Marseille depuis 1998. Dans ce cas, on sélectionne la fraction de l'effluent de régénération la plus concentrée, cette fraction dont le titre en sel est de l'ordre de 80 g/l de sel représente environ 80% à 90 % du sel contenu dans les éluats. Cette fraction est traitée par nanofiltration. Grâce à cette nanofiltration, les colorants sont concentrés 10 à 15 fois dans le rétentat de nanofiltration issu de cette fraction très concentrée en sel. La majorité du sel passe en effet à travers la membrane de nanofiltration, et se retrouve ainsi dans le perméat de nanofiltration qui servira de base pour la régénération suivante de la résine échangeuse d'ions.

La concentration en ions chlorures du perméat de nanofiltration est remontée de 80 à 100 g/l par addition de saumure fraiche concentrée à 250 g/l, le pH est ajusté.

Ce perméat de nanofiltration ayant ainsi son titrage en ions chlorures réajusté peut de nouveau être utilisé en tant que saumure de régénération.

Avantageusement, avec ce procédé simple, 80 % du sel est ainsi recyclé. La fraction du rétentat de nanofiltration riche en colorants est mélangée avec les fractions diluées de l'effluent de régénération pour être traitée en station d'épuration. En effet, ce rétentat de nanofiltration est débarrassé de 80 % des sels recyclés via le perméat ; l'effluent résiduel est alors dégradable en station d'épuration. Ce procédé a cependant pour inconvénient qu'une fraction importante de l'effluent de régénération comprenant une faible concentration en ions chlorures, en particulier nettement inférieure à 80 g/l et notamment de l'ordre de 10 à 20 g/l est perdue. L'appoint de sel, correspondant à environ 20% des besoins, est apporté par addition de saumure fraiche concentrée directement dans le perméat pour ajuster la saumure de régénération en volume et en concentration.

Par ailleurs, il existe des normes de plus en plus contraignantes concernant les rejets dans les effluents et donc une demande pour limiter au maximum le volume des effluents à traiter.

Dans certains pays, en particulier dans ceux dans lesquels l'eau est rare, il est impératif de limiter au maximum le volume d'effluents à traiter et de recycler le maximum d'eau. Afin de répondre à ces objectifs, on connaît notamment un procédé consistant à collecter la totalité des fractions de l'effluent de régénération pour séparer les colorants du sel par nanofiltration.

Dans ce cas, les fractions chargées en sel et colorées de l'effluent de régénération sont collectées pour être soumises à une nanofiltration pour séparer les colorants du sel. La quantité de sel ainsi collectée représente la quasi-totalité du sel contenu dans l'éluat mais sa concentration dans le perméat de nanofiltration est plus faible puisqu'elle est d'environ 50 g/l d'ions chlorures. L'ajustement du volume et de la concentration du régénérant nécessite une étape de concentration par évaporation de l'eau des fractions collectées afin d'ajuster la concentration en sel. Cette étape peut être réalisée directement dans un aérotherme ; dans ce cas l'eau évaporée est perdue, l'utilisation d'un évaporateur permet de récupérer une partie des condensats réutilisables comme eau de procédé. Quelle que soit la technique de concentration, ce procédé est coûteux en énergie car il suppose une forte consommation de vapeur pour évaporer une grande quantité d'eau. Lorsqu'un évaporateur est mis en oeuvre, la condensation des buées nécessite la mise en oeuvre d'une tour de refroidissement ; la récupération d'eau n'est donc pas complète. On estime ainsi que la consommation en eau nécessaire à la condensation des vapeurs émises est de l'ordre de 1/3 des condensats produits. De plus, la conduite des aérothermes et de la tour de refroidissement est parfois délicate du fait de la dispersion des aérosols souvent accusés d'être à l'origine de problèmes sanitaires. Enfin, les risques de corrosion induits par la concentration d'une solution de sel imposent d'utiliser des acides spéciaux chers pour la construction de cet évaporateur. Les documents US2010/0116663 et GB1432020 divulguent des procédés pour le recyclage d'un effluent de régénération comprenant des ions chlorures d'une résine échangeuse d'ions par électrodialyse mais sans fractionnement selon le mode de l'invention.

### Objet et résumé de l'invention

La présente invention cherche à proposer un procédé de recyclage d'un effluent de régénération comprenant des ions chlorures, en particulier une saumure de régénération, et éventuellement des colorants, permettant de récupérer le maximum d'eau, de limiter la quantité d'effluents polluants et de récupérer au maximum les ions chlorures, en particulier les sels de la saumure de régénération, tout en minimisant le coût des différentes étapes de recyclage dudit effluent.

La présente invention vise en particulier à récupérer de façon économique le sel contenu dans les fractions diluées issues dudit effluent de régénération.

La présente invention pallie tout ou partie des problèmes précités en ce qu'elle a pour objet, selon un premier aspect, un procédé de recyclage d'un effluent de régénération comprenant des ions chlorures d'une résine échangeuse d'ions comprenant les étapes suivantes :
(i) Fournir un effluent de régénération comprenant des ions chlorures ;
(ii) Sélectionner des fractions A, B, et optionnellement B', issues directement dudit effluent de régénération ou après une ou plusieurs étapes de modification de la concentration en ions chlorures, ayant des concentrations en ions chlorures (g/l) respectivement (a), (b) et (b') > 0 g/l, avec (a)> (b) ;
(iii) Transférer par électrodialyse les ions chlorures de la fraction B vers la fraction A pour l'obtention d'une fraction C ayant une concentration en ions chlorures (c) supérieure à (a) ; ou
(iv) Transférer par électrodialyse les ions chlorures de la fraction B vers la fraction B', pour l'obtention d'une fraction B" ayant une concentration en ions chlorures (b") supérieure à (b') puis mélanger les fractions B" et A pour l'obtention d'une fraction C ayant une concentration en ions chlorures (c) supérieure à (a) ;
(v) Eventuellement ajouter de la saumure fraîche à la fraction C pour former une solution de saumure de régénération.

L'étape de transfert par électrodialyse des ions chlorures d'une fraction B vers une fraction A ou d'une fraction B vers une fraction B' consiste à alimenter un électrodialyseur en ces fractions, lequel électrodialyseur comprend des membranes échangeuse(s) d'ions pour respectivement diluer la fraction B et concentrer la fraction A ou la fraction B' en ions chlorures.

L'électrodialyse est un procédé de nature électrochimique. Un électrodialyseur comprend plusieurs compartiments, chaque compartiment étant alimenté en une fraction déterminée selon l'invention, par exemple un premier ensemble de compartiments est alimenté en fractions A ou B et un second ensemble de compartiment est alimenté en fractions B ou B', le premier ensemble étant alterné avec le second ensemble. Chaque compartiment est séparé du ou des compartiments adjacents par une membrane échangeuse(s) d'ions. De préférence, ces membranes sont disposées en sorte d'alterner des membranes anioniques et cationiques. Sous l'action d'un champs électrique, les membranes anioniques ne se laissent franchir que par des anions, et les membranes cationiques ne se laissent franchir que par des cations. Les cations migrent dans le sens du courant électrique tandis que les anions migrent dans le sens inverse du courant électrique.

Ce phénomène permet de disposer alternativement dans l'électrodialyseur, des compartiments de dilution, i.e des compartiments dans lesquels la concentration en ions chlorures diminuent, avec des compartiments de concentration, i.e des compartiments dans lesquels la concentration en ions chlorures augmentent.

Dans le cadre de la présente invention, on comprend par effluent de régénération comprenant des ions chlorures, le flux d'eau chargée en ions chlorures obtenu à l'issu de la régénération d'une résine échangeuse d'ions, anioniques, cationiques ou adsorbante.

On comprend au sens de la présente invention, par saumure de régénération une solution aqueuse d'un sel comprenant des ions chlorures, en particulier du chlorure de sodium, utilisée pour la régénération d'une résine échangeuse d'ions, anioniques, cationiques ou adsorbante.

Les fractions A, B et optionnellement B' sont issues indépendamment l'une de l'autre, directement ou non dudit effluent de régénération.

Au comprend au sens de la présente invention par toute étape de modification de la concentration en ions chlorures d'une fraction, toute étape choisie de préférence parmi l'évaporation de l'eau, l'osmose inverse, l'électrodialyse ou encore la filtration, notamment la diafiltration.

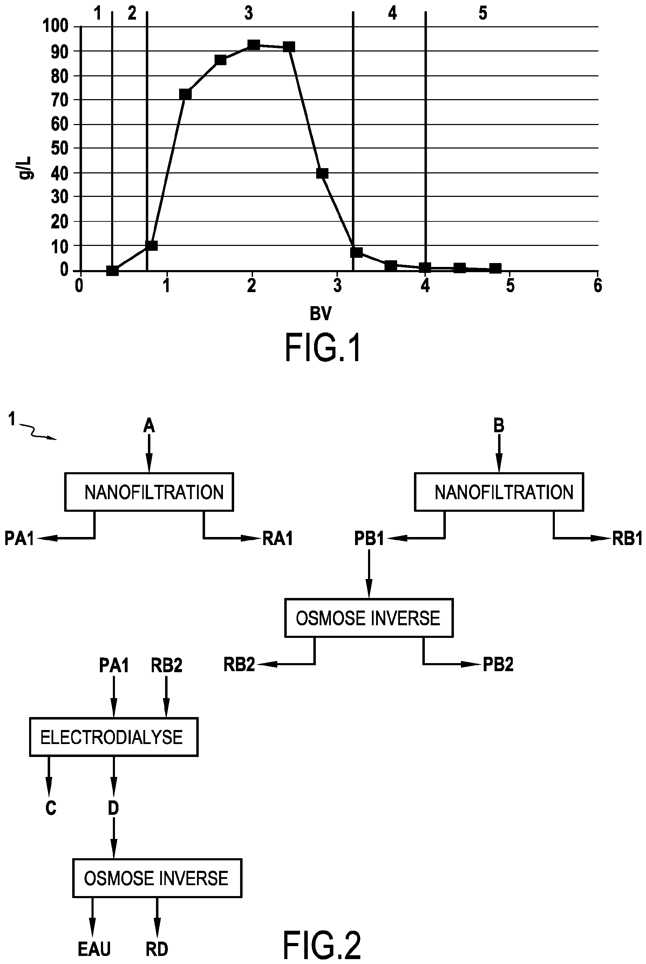

S'agissant en particulier d'un effluent de régénération d'une résine échangeuse d'ions pour la décoloration d'une solution sucrée colorée, l'effluent de régénération est l'effluent obtenu après un premier rinçage puis le passage de la saumure de régénération et enfin un dernier rinçage sur la résine échangeuse d'ions. Tel que décrit ci-dessus et en référence à la figure 1 annexée à la présente, l'effluent de régénération comprend dans un premier temps un volume donné d'eau (fraction 1) puis un volume donné d'eau salée colorée (fraction 2), en particulier ayant une teneur en sel de l'ordre de 10 g/l, puis un volume donné d'eau saumurée colorée (fraction 3), en particulier comprenant une teneur en ions chlorures de l'ordre de 80 g/l, puis un volume d'eau salée (fraction 4), en particulier ayant une teneur en ions chlorures de l'ordre de 10 g/l et enfin un volume d'eau déterminé (fraction 5).

Dans le cadre de la présente invention, les concentrations en ions chlorures sont données en gramme par litre (g/l).

La fraction B ou B' peut comprendre une ou plusieurs fractions issues dudit effluent de régénération en mélange, et de préférence choisie(s) parmi les fractions n° 1 à 5.

De préférence, la saumure fraîche a une concentration en ions chlorures de l'ordre de 100g/l. La saumure fraîche est de préférence préparée par dilution à partir d'une solution à 200-300 g/l d'ions chlorures proche de la saturation.. Avantageusement, contrairement au procédé de l'état de la technique concentrant les fractions chargées en sels par évaporation, et donc cherchant à éliminer l'élément majoritaire par changement de phase à savoir l'eau, l'énergie consommée en électrodialyse est proportionnelle au déplacement de l'élément minoritaire (puisque de la fraction la moins concentrée vers la fraction de même concentration ou plus concentrée), dans le cas de la présente invention les ions chlorures.

L'utilisation de l'électrodialyse pour enrichir en ions chlorures une fraction déjà chargée en ions chlorures est plus économique et plus simple à mettre oeuvre que les techniques de concentration par évaporation. En éléctrodialyse, la consommation d'énergie électrique est proportionnelle à la quantité d'ions déplacés, dans les conditions de nos essais, cette consommation était inférieure à 1 kwheure par kilo de sel déplacé. La consommation de vapeur d'un évaporateur triple effet est de l'ordre de 0,25 kwheure/kilo d'eau, pour concentrer une saumure de 20g/L à 100g/l, la consommation d'énergie correspond à 11 kwheure/ kilo de sel recyclé.

De préférence, le transfert par électrodialyse des ions chlorures d'une fraction à une autre fraction, est effectuée de la fraction la moins concentrée vers la fraction la plus concentrée ou entre deux fractions de concentrations, initiales, sensiblement identiques, l'une étant appauvrie en ions chlorures pendant que la concentration en ions chlorures de l'autre est augmentée. Etant donné que le but de la présente invention est de récupérer une solution la plus chargée en ions chlorures possible, il n'y aurait que peu d'intérêt économique à diluer une fraction pour la reconcentrer par la suite.

De préférence la concentration en ions chlorures (b') de la fraction B' est supérieure ou égale à la concentration en ions chlorures (b) de la fraction B. Avantageusement, la concentration (b') est de l'ordre de une fois à deux fois la concentration (b).

Dans une variante, la concentration en ions chlorures (a) de la fraction A est de l'ordre de 1,30 à dix fois, de préférence de l'ordre de 1,30 à huit fois, la concentration en ions chlorures (b) ou (b').

De préférence, la fraction A, correspondant au pic de concentration de l'éluat ou effluent de régénération, a une concentration comprise entre 70 et 85 g/l. La fraction B, représentant les fractions précédant et/ou suivant ce pic de concentration, a une concentration entre 10 et 25 g/l suivant les limites que l'on impartie aux différentes fractions.

Dans une variante, le procédé de recyclage d'un effluent de régénération comprend des ions chlorures d'une résine échangeuse d'ions, de préférence anioniques, pour la décoloration d'une solution sucrée colorée selon l'une des variantes de réalisation précédentes. Avantageusement, l'effluent de régénération comprend des colorants, notamment des polyphénols.

Dans une variante, la fraction A comprend une concentration en ions chlorures supérieure ou égale à 40 g/litre, de préférence supérieure ou égale à 60 g/litre.

De préférence, la fraction A comprend une concentration en ions chlorures supérieure ou égale à 70 g/l, encore de préférence supérieure ou égale à 80 g/l.

Dans une variante, la fraction B, éventuellement la fraction B', comprend une concentration en ions chlorures inférieure ou égale à 60 g/litre, de préférence supérieure ou égale à 10 g/litre, encore de préférence supérieure ou égale à 30 g/l, et encore de préférence supérieure ou égale à 50 g/l.

Dans une variante, avant l'étape de transfert des ions chlorures par électrodialyse iii) ou iv), la fraction A, et éventuellement la fraction B ou les fractions B et B', comprenant des ions chlorures et des colorants, subi(ssent)(t) une étape de nanofiltration pour la formation d'un perméat de nanofiltration (PA1), éventuellement (PB1) ou (PB1) et (PB'1), et d'un rétentat de nanofiltration (RA1) de la fraction A, éventuellement d'un rétentat de nanofiltration (RB1) ou (RB1) et (RB'1).

De préférence, cette étape a pour but de former un perméat de nanofiltration ayant une concentration en ions chlorures (a), (b) ou (b'), peu colorée ou exempt de colorants.

De préférence, le rétentat de nanofiltration conserve également les concentrations en ions chlorures initiales (a), (b) ou (b') de la fraction dont il est issu mais est chargé en colorants.

Le rétentat de nanofiltration pourra être envoyé vers les effluents de l'usine ou, à condition qu'il ait subi une diafiltration, il pourra être mélangé aux mélasses de la sucrerie.

Le traitement de ces effluents par nanofiltration a été largement décrit dans la littérature, plusieurs types de membranes de nanofiltration telles que les membranes type DL de GE (General Electric), moyennant un ajustement du pH de l'éluat inférieur à 10,5, ou PES 10 de Nadir, sans ajustement du pH, donnent de bons résultats.

La pression de travail est généralement maintenue autour de 20 bars, la température de travail dépend de la membrane utilisée, elle est généralement maintenue en dessous de 50 °C mais certaines membranes peuvent tolérées des températures plus élevées, par exemple 60°C voire 80°C.

Dans une sous-variante, la fraction B soumise à une étape de nanofiltration comprend le rétentat de nanofiltration (RA1) de la fraction A, éventuellement en mélange avec une ou plusieurs fractions issues de l'effluent de régénération ayant une concentration en ions chlorures supérieure à 0 g/l, et de préférence inférieure à 30 g/l, encore de préférence inférieure à 15 g/l.

De préférence, la ou lesdites fractions sont choisies parmi les fractions n° 1 à 5 décrites ci-dessus.

Dans une variante, avant l'étape iii) ou iv), le rétentat de nanofiltration (RA1) de la fraction A, ou (RB1) de la fraction B, subit une étape de diafiltration comprenant au moins un lavage par une solution aqueuse, éventuellement comprenant des ions chlorures, lors de son passage sur la membrane utilisée à l'étape de nanofiltration pour la formation d'un perméat de diafiltration (PA2) ou (PB2) et d'un rétentat de diafiltration (RA2) ou (RB2).

Avantageusement, une partie des ions chlorures du rétentat de nanofiltration est récupérée via le perméat de diafiltration (PA2) qui pourra à son tour être utilisé pour générer une fraction B ou B' selon l'invention.

La concentration du perméat de diafiltration (PA2) en ions chlorures est de deux à dix fois moins, de préférence de deux à huit fois moins, la concentration en ions chlorures du rétentat de nanofiltration (RA1).

L'étape de diafiltration est de préférence effectuée sur l'unité de nanofiltration ou sur une unité comprenant une ou plusieurs membranes de filtration aptes à séparer les colorants des ions chlorures de sorte que le rétentat de nanofiltration (RA2) est le moins chargé en sel possible.

Dans une variante, le perméat de nanofiltration (PB1) de la fraction B, éventuellement le perméat de nanofiltration (PB'1) de la fraction B', subit une étape d'osmose inverse en sorte de produire un rétentat d'osmose inverse (RB2), éventuellement (RB'2), ayant une concentration en ions chlorures (g/l) supérieure à la concentration en ions chlorures (g/l) dudit perméat de nanofiltration (PB1) de la fraction B, éventuellement dudit perméat de nanofiltration (PB'1).

Avantageusement, l'étape d'osmose inverse permet de concentrer la fraction (PB1), et éventuellement la fraction (PB'1), en ions chlorures et de récupérer de l'eau.

L'osmose inverse est un procédé de séparation en phase liquide par permutation à travers des membranes semi-sélectives sous l'effet d'un gradient de pression. Une membrane semi-sélective est une membrane permettant certains transferts de matière entre deux milieux qu'elle sépare. Une unité d'osmose inverse comporte en plus des supports, également appelés modules, au moins une pompe à haute pression (20 à 80 bars) pour l'osmose inverse et un échangeur de chaleur pour maintenir les liquides aux températures souhaitées. L'étape d'osmose inverse selon l'invention peut être effectuée en continu comme en discontinu. Les membranes osmose inverse sont le plus souvent fabriquées en acétate de cellulose ou en polymère de synthèse (polyamide, polysulfone).

Elles sont généralement sous forme de modules spiralés mais peuvent aussi être planes ou tubulaires ou en fibres creuses obtenues en filant des polymères.

De préférence, pour cette étape, le pH et la température de la fraction à traiter devront être ajustés pour correspondre aux plages d'utilisation des membranes retenues. Par exemple, un pH compris entre 2 et 9 et une température inférieure à 55°C si on utilise des modules de membranes spiralés type AD de chez GE (General Electric). Certaines membranes d'osmose peuvent avoir des plages d'utilisation moins restrictives.

Dans une variante, le perméat de diafiltration (PA2) ou (PB2), éventuellement en mélange avec une ou plusieurs fractions issues de l'effluent de régénération ayant une concentration en ions chlorures supérieure à 0 g/l, subit une étape d'osmose inverse en sorte de produire un rétentat d'osmose (RA3) ou (RB3) ayant une concentration en ions chlorures (g/l) supérieure à la concentration en ions chlorures (g/l) dudit perméat de diafiltration (PA2) ou (PB2), éventuellement en mélange avec une ou plusieurs fractions issues de l'effluent de régénération ayant une concentration en ions chlorures supérieure à 0 g/l.

De préférence, la ou lesdites fractions ont une concentration en ions chlorures inférieure à 30 g/l, encore de préférence inférieure à 15 g/l.

De préférence, la ou lesdites fractions sont choisies parmi les fractions 1 à 5 décrites ci-dessus.

Cette étape d'osmose inverse permet également de récupérer de l'eau.

Dans une variante, la fraction A et la fraction B à l'étape iii) de transfert des ions chlorures par électrodialyse comprennent respectivement le perméat de nanofiltration (PA1) issu de la fraction A, et le rétentat d'osmose inverse (RB3) ou (RB2) issu de la fraction B ou (RA3) issu de la fraction A.

Dans une variante, la fraction A comprend le perméat de nanofiltration (PA1) de la fraction A ; la fraction B et la fraction B' comprennent respectivement soit les perméats de nanofiltration (PB1, PB'1) issus des fractions B et B', soit les rétentats d'osmose inverse (RB2, RB'2) issus des fractions B et B'.

Dans une variante, la solution aqueuse utilisée à l'étape de diafiltration comprend :
- une ou plusieurs fractions de l'effluent de régénération ayant une concentration en ions chlorures (g/l) inférieure, de préférence d'au moins de 300%, à la concentration en ions chlorures du rétentat de nanofiltration (RA1) de la fraction A, et/ou
- la fraction B et/ou B'.

L'eau utilisée pour ôter les colorants des rétentats de nanofiltration est avantageusement recyclée à partir de l'effluent de régénération.

Dans une variante, la fraction B ayant subi l'étape de transfert iii) des ions chlorures par électrodialyse, correspondant alors à la fraction D, subit une étape d'osmose inverse en sorte de récupérer de l'eau issue de l'effluent de régénération et de concentrer sa teneur en ions chlorures, puis éventuellement la renvoyer vers ladite étape d'électrodialyse.

Dans une variante, les fractions B et B' à l'étape ii) sont deux fractions issues du même rétentat d'osmose inverse (RF1) d'une fraction de départ F issue dudit effluent de régénération, de concentration (f) en ions chlorures (g/l).

La présente invention a pour objet selon un deuxième aspect, l'utilisation de l'électrodialyse pour recycler un effluent de régénération comprenant des ions chlorures d'une résine échangeuse d'ions pour transférer des ions chlorures d'une fraction B vers une fraction A, les fractions A et B ayant des concentrations en ions chlorures respectivement (a) et (b), avec (a) ≥ (b) > 0 g/l, lesdites fractions A et B étant issues, indépendamment l'une de l'autre, directement ou après une ou plusieurs étapes de modification de la concentration en ions chlorures, dudit effluent de régénération.

### Brève description des dessins

La présente invention sera mieux comprise à la lecture de la description des six exemples de réalisation ci-après, cités à titre non limitatif, et illustrés par les figures suivantes, dans lesquelles :
- la figure 1 représente de façon schématique les concentrations en sel (g/l) de différentes fractions d'un éluat ou effluent de régénération ;
- la figure 2 représente de façon schématique les différentes étapes d'un premier exemple de procédé selon l'invention ;
- la figure 3 représente de façon schématique les différentes étapes d'un second exemple de procédé selon l'invention ;
- la figure 4 représente de façon schématique les différentes étapes d'un troisième exemple de procédé selon l'invention ;
- la figure 5 représente de façon schématique les différentes étapes d'un quatrième exemple de procédé selon l'invention ;
- la figure 6 représente de façon schématique les différentes étapes d'un cinquième exemple de procédé selon l'invention ;
- la figure 7 représente de façon schématique les différentes étapes d'un sixième exemple de procédé selon l'invention.

### Description détaillée de l'invention

La figure 1 représente le profil d'élution en sortie de colonne, à la régénération. Environ 80% à 90% du sel des éluats ou fractions se retrouve dans un volume correspondant au volume nécessaire à la régénération mais avec un titre en sel de l'ordre de 80 g/l, ce qui correspond à la fraction n°3. 10% à 20% du sel des éluats se trouve dans les fractions diluées avant et après ce pic, ce qui correspondant aux fractions n°2 et n°4.

Les six exemples de procédé selon l'invention sont mis en oeuvre sur un effluent de régénération utilisé suite à la décoloration d'une solution de sucre roux, à 60 brix, qui a été décolorée de 800 icumsa à 90 icumsa en passant à travers une colonne contenant 30 l de résine anionique, type FPA90 de Röhm & Has. La température de travail est de 80°C et le débit de passage de 60 litre/heure. La résine, saturée en colorants, a été régénérée, à chaud (80°C) en passant une solution de sel à 100 g/l dont le pH a été ajusté à 13 par addition de soude. Pour la régénération de la colonne de décoloration, on applique le protocole suivant :
- Régénération 54 litres soit 1,8 BV
- Déplacement 60 litres soit 2 BV
- Rinçage final 30 litres soit 1 BV.

La valeur BV correspondant au volume de la résine à régénérer.

Le premier exemple de procédé 1 illustré à la figure 2 comprend la sélection de fractions A et B issue directement dudit effluent de régénération comprenant des ions chlorures. Les fractions A et B ont respectivement des concentrations en ions chlorure (a) et (b) de l'ordre de 80g/l et 10g/l.

Dans cet exemple précis, la fraction A correspond, sur le profil d'élution d'un effluent de régénération représenté à la figure 1, à la fraction n°3. La fraction B correspond quant à elle à la fraction n°2 et/ou la fraction n°4 du profil d'élution représenté à la figure 1.

Les fractions A et B subissent une étape de nanofiltration en sorte de former des perméats de nano-filtration respectivement PA1 et PB1 et des rétentats de nanofiltration respectivement RA1 et RB1.

De bons résultats ont été obtenus pour la nanofiltration avec des membranes spiralées de type DK ou DL de GE (General Electric), avec un ajustement de la ou des fraction(s) à traiter à une valeur de pH inférieure à 10,5. Les membranes de type PES 10 de chez Nadir peuvent être également utilisées. Ces dernières sont plus tolérantes au pH et à la température, elles permettent de travailler au pH de récupération des fractions, entre 11,5 et 13,5, et à une température de l'ordre de 60°C.

Le perméat de nanofiltration PB1 de la fraction B subit ensuite une étape d'osmose inverse afin de concentrer ce perméat en ions chlorures pour la formation d'un rétentat d'osmose inverse RB2 et la récupération d'eau issue de l'effluent de régénération.

Le perméat de nanofiltration PA1 de la fraction A et le rétentat d'osmose inverse RB2 du perméat de nanofiltration de la fraction B subissent une étape d'électrodialyse dans laquelle les ions chlorures du rétentat RB2 sont transférés vers le perméat PA1 en sorte de concentrer ce dernier pour l'obtention d'une fraction C ayant une concentration (c) en ions chlorures supérieure à la concentration en ions chlorures de PA1. Dans ce cas d'espèce, la fraction C présente une concentration de l'ordre de 90 à 100 g/l d'ions chlorures.

La fraction D diluée en ions chlorures issue de l'électrodialyse subit une étape d'osmose inverse en sorte de récupérer l'eau issue de l'effluent de régénération. Le rétentat RD peut par la suite être mélangé à la fraction B initiale ou encore au rétentat RB2 lors de l'étape d'électrodialyse.

Optionnellement, ladite fraction D peut être recyclée à l'étape d'osmose inverse en mélange avec le perméat de nanofiltration de la fraction B, à savoir PB1.

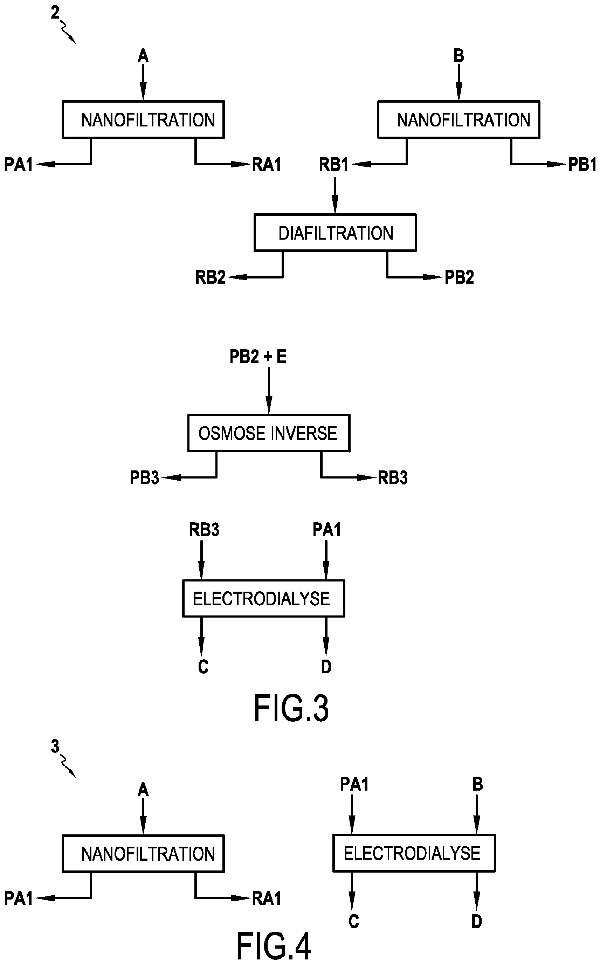

Un second exemple de procédé 2 est décrit ci-après en détails en référence à la figure 3. A la sortie de la colonne, les effluents sont triés suivant leurs conductivités, la collecte du pic de sel a été réduite pour en augmenter la concentration. La fraction n°2 comprend 25 litres, est légèrement colorée et salée, a une concentration de 25 g/l de sel soit 625 g de sel. La fraction n° 3, correspondant à la fraction A, comprend 48 litres, et correspond au pic de couleur et de conductivité. La fraction n°3 a une concentration de 79,4 g/l de sel, soit 3811 g de sel.

Les fractions n° 1, 4 et 5, collectées ensemble, comprennent 71 litres, ont une couleur et une conductivité faibles et une concentration à 9,8 g/l de sel soit 696 g de sel.

Sur les 5400 g de sel utilisés à la régénération, 5132 g, soit 95% des sels sont collectés dans les éluats, dont 82 % dans le mélange des fractions n° 2 et 3, et 13 % dans les fractions n° 1, 4 et 5. Le perméat PA1 obtenu à l'issue de la nanofiltration de la fraction n° 3 a une concentration d'environ 79,5 g/l de sel.

La fraction n° 2 est colorée mais peu salée. La fraction n°2 est traitée par nanofiltration à la suite de la nanofiltration de la fraction n°3, en mélange avec le rétentat RA1 de la nanofiltration de la fraction n°3. On récupère ainsi un permeat PB1 à 39,3 g/l. Le mélange de la fraction n°2 et du rétentat RA1 correspond à la fraction B selon l'invention.

Le rétentat final RB1 ainsi obtenu est lavé à l'eau progressivement par diafiltration pour obtenir un rétentat RB2 dessalé, à 3 g/l, et un perméat PB2 à 10 g/l.

Les fractions 1, 4 et 5, correspondant à la fraction E, sont mélangées avec le perméat PB2. Ce mélange à 15-16 g/l de sel est ensuite concentré 3,3 fois par osmose inverse pour produire un rétentat RB3 autour de 49 g/l et un perméat PB3 à faible teneur en sel, moins de 0,5 g/l, qui peut être recyclé en tant qu'eau de procédé. Avantageusement, 99% du sel est récupéré dans le perméat PB2. Le rétentat d'osmose d'une part RB3 et le perméat PA1 d'autre part sont ensuite traités en électrodialyse. Sous l'effet du courant électrique appliqué, le rétentat RB3 est déminéralisé alors que le perméat de nanofiltration PA1 est enrichi en sel pour former la fraction C enrichie. Le pilote d'électrodialyse utilisé était de type EUR6 d'Eurodia équipé de cinquante cellules d'électrodialyse. Chaque cellule est constituée d'une membrane anionique, type AMX, et d'une membrane cationique, type CMX, de marque Neosepta de la société Astom-corp. Ce pilote est constitué entre autre, d'un stack d'électrodialyse contenant les membranes, d'un générateur de courant continu, d'un circuit saumure et d'un circuit perméat.

On maintient une recirculation continue de 1000l/h, en boucle, pour chacun des deux produits, rétentat d'osmose RB3 et perméat PA1, la température est maintenue de préférence à environ 25 °C. On applique alors une tension continue aux bornes du stack d'électrodialyse. Sous l'effet du courant électrique, le sel migre progressivement du compartiment rétentat RB3 vers le circuit perméat PA1. Dans cet exemple précis, en appliquant une tension constante de 46 volts, l'intensité reste stable puis diminue régulièrement de 33 à 20 ampères lorsque la conductivité du rétentat RB3 diminue de 76 mS/cm à 5,4 mS/cm. En même temps, la conductivité du perméat PA1 augmente de 113 mS/cm à 149 mS /cm, ceci en 24 minutes. A la fin de l'essai, les circuits sont vidangés et analysés pour établir un bilan matière décrit ci-après au tableau 1.

**Tableau 1**

| | Volume litre | Conductivité | NaCl | Transfert | |
|---|---|---|---|---|---|
| | l | mS/cm | g/l | Sel (g) | Eau (l) |
| Rétentat initial / RB3 | 26,6 | 76,4 | 49,1 | | |
| Rétentat final / D | 22,0 | 10,0 | 5,4 | -1193 | -4,6 |
| Permeat initial / PA1 | 20,0 | 113 | 79,5 | | |
| Permeat final / C | 24,6 | 149 | 114 | 1200 | 4,6 |

Dans cet exemple précis, l'intensité moyenne est de 31 ampères. En 24 min, 1,2 kg de sel et 4,6 litres d'eau sont transférés d'un circuit vers l'autre. Avec une densité de courant de 548 ampères/m², on observe un flux de transfert du sel correspondant à 18,3 eq/h/m², soit un rendement faradique de 90%. En tenant compte de la consommation des pompes de circulation, la consommation électrique de l'opération serait de 0,54 kwh/kg sel déplacé. La concentration finale du perméat de nanofiltration PA1 a ainsi pu être augmentée de 79,5 à 113 g/l de NaCl pour former la fraction C. Dans cette configuration, 91% du sel de la fraction la moins concentrée RB3 est transféré vers la fraction la plus concentrée PA1. En même temps que le transfert du sel, on observe un transfert d'eau correspondant à 3,8 l par kg de sel transféré.

L'utilisation des coefficients de partage de chacune des opérations unitaires mises en oeuvre permet de construire un bilan matière et d'évaluer l'avantage procuré par ce procédé. Dans cet exemple, la mesure des chlorures dans les éluats montre que 95% du sel mis en oeuvre à la régénération, soit l'équivalent de 171 g/l de résine sur les 180 g/l mis en oeuvre, sont retrouvés dans les 144 l d'éluats collectés.

Au niveau de la nanofiltration, 78% du sel se retrouve dans le perméat PA1; 21,5 % dans le perméat PB1 et le perméat de diafiltration PB2 ; moins de 0,5% reste dans le rétentat final D.

Au niveau de l'osmose inverse, la perte en sel dans le perméat PB3 représente 1% du sel traité à ce niveau.

Bien que plus de 90% du sel contenu dans le rétentat d'osmose RB3 utilisé en électrodialyse soit transféré vers la fraction concentrée PA1, la fraction partiellement déminéralisée D, issue de ce rétentat constitue la principale source de perte en sel, de l'ordre de 10% du rétentat d'osmose RB3, soit environ 2,7% du sel total collecté. Ce sel est récupérable en recyclant ce rétentat D vers l'unité d'osmose inverse.

Ainsi, plus de 96% du sel contenu dans les éluats sont récupérables par une combinaison de nanofiltration, osmose inverse et électrodialyse.

Le troisième exemple de procédé selon l'invention est décrit en détails ci-après et en référence à la figure 4, et diffère du premier exemple en ce qu'il ne comprend pas d'étape de nanofiltration sur la fraction B, ni d'étape d'osmose inverse effectuée sur le perméat PB1 et sur la fraction D.

Dans ce troisième exemple de procédé, à la sortie de la colonne, les effluents sont triés suivant leurs conductivités, lesquelles dépendent de leurs teneurs en sel, ce qui permet d'établir un profil d'élution, tel que celui représenté à la figure 1 :
Fraction 1, 12 litres, a une qualité telle qu'elle est réutilisable en l'état.
Fraction 2, 10 litres, est légèrement colorée et salée.
Fraction 3, 50 litres correspond au pic de couleur et de conductivité.
Fraction 4, 20 litres, faible couleur et conductivité.
Fraction 5, 20 litres d'effluent légèrement salé.

La fraction n° 3, correspondant à la fraction A selon l'invention, est d'abord ajustée à pH 10 par ajout d'HCl puis traitée par nanofiltration en utilisant un pilote équipé d'un élément spiralé de 2,5" d'une membrane type DL de GE pour obtenir un perméat PA1 et un rétentat RA1, à FCV 10,5. Le perméat de nanofiltration PA1 ayant une teneur en sel égale à 79,5 g/l. Les fractions 2 et 4 sont mélangées pour former une fraction B selon l'invention ayant une concentration en sel de l'ordre de 20 g/l. Les fractions 2 et 4 d'une part et le perméat de nanofiltration PA1 d'autre part sont ensuite traités en électrodialyse. Sous l'effet du courant électrique appliqué, la fraction B est déminéralisée alors que le perméat de nanofiltration PA1 est enrichi en sel. Le pilote d'électrodialyse utilisé était de type EUR6 d'Eurodia équipé de 50 cellules d'électrodialyse. Chaque cellule est constituée d'une membrane anionique, type AMX, et d'une membrane cationique, type CMX, de marque Neosepta de la société Astom-corp. Ce pilote est constitué entre autre, d'un stack d'électrodialyse contenant les membranes, d'un générateur de courant continu, d'un circuit pour la fraction B et d'un circuit perméat PA1.

On maintient une recirculation continue de 1000l/h, en boucle, pour chacun des deux produits, pour la fraction B et le perméat, la température est de préférence maintenue à peu près constante à 22 °C. On applique alors une tension continue aux bornes du stack d'électrodialyse. Sous l'effet du courant électrique, le sel migre progressivement du compartiment de la fraction B vers le circuit perméat PA1. Dans cet exemple précis, en appliquant une tension constante de 46 volts, l'intensité diminue régulièrement de 23 à 4,3 ampères lorsque la conductivité de la fraction B diminue de 33 mS/cm à 1,2 mS/cm. En même temps, la conductivité du perméat PA1 augmente de 104 mS/cm à 124 mS /cm, ceci en 22 minutes. A la fin de l'essai les circuits sont vidangés et analysés pour établir un bilan matière décrit dans le tableau 2 ci-après.

**Tableau 2**

| | Volume litres | Conductivité | NaCl | Transfert | |
|---|---|---|---|---|---|
| | litres | mS/cm | g/l | Sel g | Eau l |
| Fraction B initiale | 30,0 | 33 | 19,1 | | |
| Rétentat final / D | 27,8 | 1,2 | 0,6 | -554 | -2,2 |
| Permeat initial / PA1 | 22,0 | 104 | 72,3 | | |
| Permeat final /D | 22,5 | 124 | 89,0 | 557 | 2,5 |

Dans cet exemple précis, l'intensité moyenne est de 16,3 ampères. En 22 min, 556 g de sel et 2,4 litres d'eau sont transférés d'un circuit vers l'autre. Avec une densité de courant de 290 ampères/m2, on observe un flux de transfert du sel correspondant à 9,3 eq/h/m2, soit un rendement faradique de 85%. En tenant compte de la consommation des pompes de circulation, la consommation électrique de l'opération serait de 0,62 kwh/kg sel déplacé. La concentration finale du perméat de nanofiltration PA1 correspondant à la fraction C a ainsi pu être augmentée de 72,3 à 89 l/l de NaCl. Cet essai montre que 99% du sel des fractions utilisées en électrodialyse est récupéré dans le perméat final C à une concentration proche de 90 g/l et peut être recyclé pour la régénération des résines moyennant un ajustement de sa concentration par ajout de saumure concentrée fraiche.

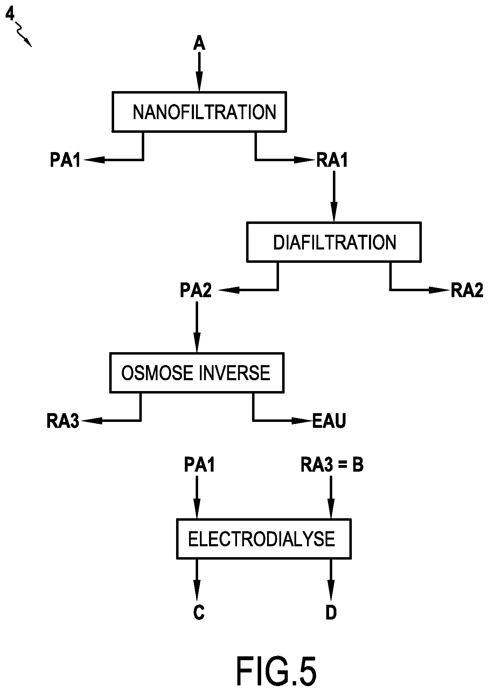

Le quatrième exemple de procédé 4 selon l'invention illustré à la figure 5 comprend une première étape de sélection d'une fraction A issue d'un effluent de régénération comprenant des ions chlorures, en particulier un effluent de régénération d'une résine échangeuse d'ions pour la décoloration d'une solution sucrée colorée.

En particulier, cette fraction A correspond à la fraction 3 sur le profil d'élution de l'effluent de régénération représenté à la figure 1. Dans cet exemple précis, la fraction A a une concentration en ions chlorures de l'ordre de 80 g/l.

La fraction A subit une étape de nanofiltration pour la formation d'un perméat de nanofiltration PA1 et d'un rétentat de nanofiltration RA1, PA1 et RA1 ont tous deux une concentration en ions chlorures de 80 g/l mais le perméat PA1 n'est plus coloré ou est exempt du colorant.

Le rétentat de nanofiltration RA1 de la fraction A subit alors une étape de diafiltration au cours de laquelle le rétentat RA1 est lavé avec de l'eau comprenant éventuellement des ions chlorures. L'eau utilisée pour cette étape de diafiltration peut comprendre une ou plusieurs fractions de l'effluent de régénération ayant une concentration en ions chlorures en (g/l) inférieure, de préférence d'au moins 300 %, à la concentration en ions chlorures du rétentat de nanofiltration RA1 de la fraction A.

Le perméat de diafiltration PA2 est avantageusement décoloré, ou exempt de colorant. Le rétentat de diafiltration RA2 est quant à lui coloré. Le perméat de diafiltration PA2 et le rétentat de diafiltration RA2 présentent dans cet exemple précis une concentration en ions chlorures de l'ordre de 10 g/l.

Le perméat de diafiltration PA2 subit ensuite une étape d'osmose inverse en sorte de concentrer sa teneur en ions chlorures, dans cet exemple précis a une teneur de l'ordre de 45 g/l. Le rétentat d'osmose inverse du perméat de diafiltration PA2 est indiqué sous la référence RA3. Cette étape d'osmose inverse permet également de générer de l'eau issue de l'effluent de régénération.

Il convient de noter que l'étape de diafiltration est de préférence effectuée sur l'unité de nanofiltration et donc sur les mêmes membranes de nanofiltration.

L'étape de transfert par électrodialyse des ions chlorures s'effectue entre le rétentat d'osmose inverse RA3 qui forme ainsi la fraction B selon l'invention et le perméat de nanofiltration PA1 de la fraction A.

L'étape d'électrodialyse permet ainsi de transférer les ions chlorures de la fraction RA3 la moins concentrée vers la fraction PA1 la plus concentrée en ions chlorures pour la formation d'une fraction C ayant une concentration en ions chlorures (c) supérieure à la concentration en ions chlorures de la fraction PA1.

La fraction D issue de l'étape d'électrodialyse est diluée en ions chlorures et peut être recyclée en eau de lavage pour l'étape de diafiltration.

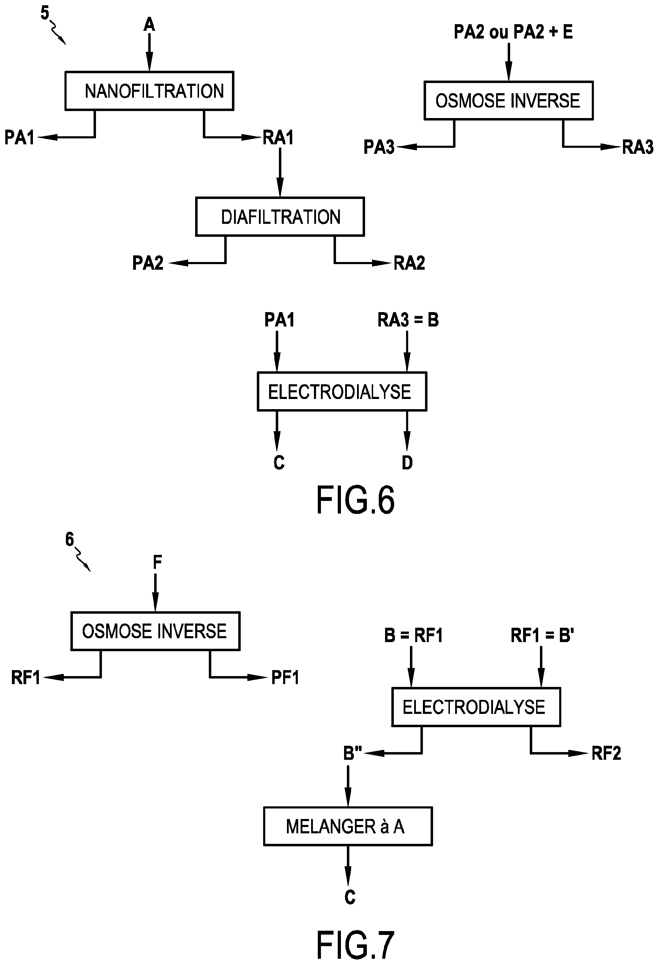

Le cinquième exemple de procédé selon l'invention, illustré à la figure 6, comprend la sélection d'une fraction A issue directement de l'effluent de régénération comprenant des ions chlorures, en particulier d'un effluent de régénération d'une résine échangeuse d'ions utilisée pour la décoloration d'une solution sucrée et colorée.

Dans cet exemple précis, cette fraction correspond à la fraction 3 sur le profil d'élution représenté à la figure 1 d'un effluent de régénération dans le domaine de la déminéralisation du sucre et aura ainsi une concentration de l'ordre de 80 g/l en ions chlorures.

Ce procédé comprend également la sélection de fractions 2 et/ou 4 représentées sur le profil d'élution illustré à la figure 1 et référencées comme correspondant à une fraction globale E.

La concentration en ions chlorures de cette fraction E serait dans cet exemple précis inférieure à 30 g/l, de préférence de l'ordre de 10 g/l en ions chlorures.

La fraction A subit une étape de nanofiltration pour la formation d'un perméat PA1 de nanofiltration et d'un rétentat RA1 de nanofiltration.

Cette étape de nanofiltration présente les mêmes effets techniques que ceux décrits pour les premiers et seconds exemples de procédés (1,2) illustrés aux figures 2 et 3 ci-dessus et permettent notamment d'ôter les colorants du perméat PA1.

Le rétentat de nanofiltration RA1 subit une étape de diafiltration, de préférence sur l'unité de nanofiltration, à l'aide d'eau de lavage, éventuellement faiblement chargée en ions chlorures recyclée dudit effluent de régénération par des étapes subséquentes.

Le perméat de diafiltration PA2 est ainsi dilué d'au moins quatre fois par rapport au rétentat de nanofiltration RA1, de préférence d'au moins 8 fois dans cet exemple précis par rapport au rétentat à la concentration en ions chlorures de rétentat RA1.

De préférence, le perméat de diafiltration a ainsi une concentration en ions chlorures de l'ordre de 10 g/l et est décoloré.

Le perméat de diafiltration PA2, ajouté éventuellement à la fraction E décrite ci-dessus, subit une étape d'osmose inverse pour concentrer leur concentration en ions chlorures et la récupération d'eau issue de l'effluent de régénération.

Le rétentat d'osmose inverse RA3 obtenu présente ainsi une concentration dans cet exemple précis de l'ordre de 50 g/l.

Le rétentat d'osmose inverse RA3 correspond ainsi à la fraction B selon l'invention.

Le rétentat d'osmose inverse RA3 et le perméat de nanofiltration PA1 subissent une étape d'électrodialyse au cours de laquelle les ions chlorures de la fraction chlorure RA3 sont transférés vers la fraction PA1 pour enrichir cette dernière et former ainsi une fraction C ayant une concentration en ions chlorures supérieure à celle de la fraction PA1.

La fraction D diluée en ions chlorures obtenue à l'issue de l'étape d'électrodialyse est recyclée dans l'étape de diafiltration en tant qu'eau de lavage.

De préférence, la concentration en ions chlorures de la fraction C est de l'ordre de 90 à 100 g/l.

Le sixième exemple de procédé 6, illustré à la figure 7, prévoit la sélection d'une fraction F d'un effluent de régénération comprenant des ions chlorures, en particulier d'un effluent de régénération d'une résine échangeuse d'ions pour la décoloration d'une solution sucrée et colorée.

Dans cet exemple précis, cette fraction F correspond aux fractions 1 et 2 illustrées sur le profil d'élution représenté à la figure 1.

Cette fraction F subit une étape d'osmose inverse en sorte de concentrer sa teneur en ions chlorures dans un rétentat d'osmose inverse RF1, de préférence le rétentat RF1 a une teneur en ions chlorures supérieure ou égale à 50 g/l.

Ce rétentat d'osmose inverse RF1 est séparé en deux fractions respectivement B et B' selon l'invention. Ces deux fractions B et B' ont une concentration en ions chlorures du même ordre puisqu'elles sont issues du même rétentat d'osmose inverse RF1.

Ces fractions B et B' sont soumises à une étape d'électrodialyse au cours de laquelle les ions chlorures de la fraction B' vont être transférés vers la fraction B pour la formation d'une fraction B" davantage concentrée en ions chlorures.

La concentration en ions chlorures (b") de la fraction B" est supérieure à la concentration en ions chlorures (b) de la fraction B.

La concentration en ions chlorures de la fraction B" est dans cet exemple précis de l'ordre de 90 à 100 g/l.

La fraction B" est ensuite mélangée à une fraction A issue directement d'un effluent de régénération comprenant des ions chlorures, pour la formation d'une fraction C ayant une concentration en ions chlorures (c).

Pour le cas où A est issu d'un effluent de régénération d'une résine échangeuse d'ions pour la décoloration d'une solution sucrée et colorée, la fraction A subit au préalable une étape de nanofiltration pour la formation d'un perméat de nanofiltration PA1.

Dans ce dernier cas, la fraction B" est alors mélangée au perméat de nanofiltration PA1.

Les concentrations en ions chlorures des fractions C décrites pour les procédés 1 à 6 peuvent être ajustées à 100 g/l par l'ajout de saumure fraîche.

## Revendications

1. Procédé de recyclage d'un effluent de régénération comprenant des ions chlorures d'une résine échangeuse d'ions comprenant les étapes suivantes :
(i) Fournir un effluent de régénération comprenant des ions chlorures ;
(ii) Sélectionner des fractions A, B, et optionnellement B', issues directement dudit effluent de régénération ou après une ou plusieurs étapes de modification de la concentration en ions chlorures, ayant des concentrations en ions chlorures (g/l) respectivement (a), (b) et (b') > 0 g/l, avec (a)> (b) ;
(iii) Transférer par électrodialyse les ions chlorures de la fraction B vers la fraction A pour l'obtention d'une fraction C ayant une concentration en ions chlorures (c) supérieure à (a) ; ou
(iv) Transférer par électrodialyse les ions chlorures de la fraction B vers la fraction B', pour l'obtention d'une fraction B" ayant une concentration en ions chlorures (b") supérieure à (b') puis mélanger les fractions B" et A pour l'obtention d'une fraction C ayant une concentration en ions chlorures (c) supérieure à (a) ;
(v) Eventuellement ajouter de la saumure fraîche à la fraction C pour former une solution de saumure de régénération.

2. Procédé de recyclage selon la revendication 1, **caractérisé en ce que** (a) est de l'ordre de 1,30 à 10 fois (b) ou (b').

3. Procédé de recyclage d'un effluent de régénération comprenant des ions chlorures d'une résine échangeuse d'ions, de préférence anioniques, pour la décoloration d'une solution sucrée colorée selon l'une ou l'autre des revendications 1 et 2, **caractérisé en ce que** l'effluent de régénération comprend des colorants, notamment des polyphénols.

4. Procédé de recyclage selon l'une quelconque des revendications 1 à 3, **caractérisé en ce que** la fraction A comprend une concentration en ions chlorures supérieure ou égale à 40 g/litre, de préférence supérieure ou égale à 60 g/litre.

5. Procédé de recyclage selon l'une quelconque des revendications 1 à 4, **caractérisé en ce que** la fraction B, éventuellement la fraction B', comprend une concentration en ions chlorures inférieure ou égale à 60 g/litre, de préférence supérieure ou égale à 10 g/litre.

6. Procédé de recyclage selon l'une quelconque des revendications 1 à 5, **caractérisé en ce qu'**avant l'étape de transfert des ions chlorures par électrodialyse iii) ou iv), la fraction A, et éventuellement la fraction B ou les fractions B et B', comprenant des ions chlorures et des colorants, subi(ssent)(t) une étape de nanofiltration pour la formation d'un perméat de nanofiltration (PA1), éventuellement (PB1) ou (PB1) et (PB'1), et d'un rétentat de nanofiltration (RA1) de la fraction A, éventuellement d'un rétentat de nanofiltration (RB1) ou (RB1) et (RB'1).

7. Procédé de recyclage selon la revendication 6, **caractérisé en ce que** la fraction B soumise à une étape de nanofiltration comprend le rétentat de nanofiltration RA1 de la fraction A, éventuellement en mélange avec une ou plusieurs fractions issues de l'effluentt de régénération ayant une concentration en ions chlorures supérieure à 0 g/l, subit une étape d'osmose inverse en sorte de produire un rétentat d'osmose (RA3) ou (RB3) ayant une concentration en ions chlorures (g/l) supérieure à la concentration en ions chlorures (g/l) dudit perméat de diafiltration (PA2) ou (PB2), éventuellement en mélange avec une ou plusieurs fractions issues de l'effluant de régénération ayant une concentration en ions chlorures supérieure à 0 g/l.

8. Procédé de recyclage selon la revendication 6, **caractérisé en ce qu'**avant l'étape de transfert des ions chlorures par électrodialyse iii) ou iv), le rétentat de nanofiltration (RA1) de la fraction A, ou (RB1) de la fraction B, subit une étape de diafiltration comprenant au moins un lavage par une solution aqueuse, éventuellement comprenant des ions chlorures, lors de son passage sur la membrane utilisée à l'étape de nanofiltration pour la formation d'un perméat de diafiltration (PA2) ou (PB2) et d'un rétentat de diafiltration (RA2) ou (RB2).

9. Procédé de recyclage selon la revendication 6, **caractérisé en ce que** le perméat de nanofiltration (PB1) de la fraction B, éventuellement le perméat de nanofiltration (PB'1) de la fraction B', subit une étape d'osmose inverse en sorte de produire un rétentat d'osmose inverse (RB2), éventuellement (RB'2), ayant une concentration en ions chlorures (g/l) supérieure à la concentration en ions chlorures (g/l) dudit perméat de nanofiltration (PB1) de la fraction B, éventuellement dudit perméat de nanofiltration (PB'1).

10. Procédé de recyclage selon la revendication 8, **caractérisé en ce que** le perméat de diafiltration (PA2) ou (PB2), éventuellement en mélange avec une ou plusieurs fractions issues directement dudit effluent de régénération ayant une concentration en ions chlorures > 0 g/l, subit une étape d'osmose inverse en sorte de produire un rétentat d'osmose (RA3) ou (RB3) ayant une concentration en ions chlorures (g/l) supérieure à la concentration en ions chlorures (g/l) dudit perméat de diafiltration (PA2) ou (PB2), éventuellement en mélange avec la ou lesdites fractions.

11. Procédé de recyclage selon l'une ou l'autre des revendications 9 et 10, **caractérisé en ce que** la fraction A et la fraction B à l'étape iii) de transfert des ions chlorures par électrodialyse comprennent respectivement le perméat de nanofiltration (PA1) issu de la fraction A, et le rétentat d'osmose inverse (RB2) ou (RB3) issu de la fraction B ou (RA3) de la fraction A.

12. Procédé de recyclage selon l'une ou l'autre des revendications 6 et 9, **caractérisé en ce que** la fraction A comprend le perméat de nanofiltration (PA1) de la fraction A ; la fraction B et la fraction B' comprennent respectivement soit les perméats de nanofiltration (PB1, PB'1) issus des fractions B et B', soit les rétentats d'osmose inverse (RB2, RB'2) issus des fractions B et B'.

13. Procédé de recyclage selon la revendication 8, **caractérisé en ce que** la solution aqueuse utilisée à l'étape de diafiltration comprend :
- une ou plusieurs fractions de l'effluent de régénération ayant une concentration en ions chlorures (g/l) inférieure, de préférence d'au moins de 300%, à la concentration en ions chlorures du rétentat de nanofiltration (RA1) de la fraction A, et/ou
- la fraction B et/ou B'.

14. Procédé de recyclage selon l'une quelconque des revendications 1 à 13, **caractérisé en ce que** la fraction B ayant subi l'étape de transfert iii) des ions chlorures par électrodialyse subit une étape d'osmose inverse en sorte de récupérer de l'eau.

15. Procédé de recyclage selon l'une quelconque des revendications 1 à 14, **caractérisé en ce que** les fractions B et B' à l'étape ii) sont deux fractions issues du même rétentat d'osmose inverse (RF1) d'une fraction de départ F issue dudit effluent de régénération, de concentration (f) en ions chlorures (g/l).

## Patentansprüche

1. Verfahren zum Recyceln eines Chloridionen umfassenden Regenerationsabflusses eines Ionenaustauscherharzes, umfassend die folgenden Schritte:
(i) Bereitstellen eines Chloridionen umfassenden Regenerationsabflusses,
(ii) Auswählen von Fraktionen A, B und optional B', die direkt aus dem Regenerationsabfluss oder nach einem oder mehreren Schritten einer Änderung der Chloridionen-Konzentration hervorgegangen sind, mit Chloridionen-Konzentrationen (g/l) (a), (b) bzw. (b') > 0 g/l, wobei (a) > (b),
(iii) Überführen der Chloridionen der Fraktion B durch Elektrodialyse zu Fraktion A für den Erhalt einer Fraktion C, die eine Chloridionen-Konzentration (c) größer als (a) aufweist, oder
(iv) Überführen der Chloridionen der Fraktion B durch Elektrodialyse zu Fraktion B' für den Erhalt einer Fraktion B", die eine Chloridionen-Konzentration (b") größer als (b') aufweist, anschließend Mischen der Fraktionen B" und A für den Erhalt einer Fraktion C, die eine Chloridionen-Konzentration (c) größer als (a) aufweist,
(v) eventuell Hinzufügen von frischer Sole zu Fraktion C, um eine Regenerationssolelösung zu bilden.

2. Recyclingverfahren nach Anspruch 1, **dadurch gekennzeichnet, dass** (a) in der Größenordnung des 1,30- bis 10-fachen von (b) oder (b') liegt.

3. Verfahren zum Recyceln eines Chloridionen umfassenden Regenerationsabflusses eines Ionenaustauscherharzes, vorzugsweise anionischen, für die Entfärbung einer farbigen Zuckerlösung, nach dem einen oder dem anderen der Ansprüche 1 und 2, **dadurch gekennzeichnet, dass** der Regenerationsabfluss Farbstoffe, insbesondere Polyphenole umfasst.

4. Recyclingverfahren nach einem der Ansprüche 1 bis 3, **dadurch gekennzeichnet, dass** die Fraktion A eine Konzentration an Chloridionen von mehr als oder gleich 40 g/Liter, vorzugsweise von mehr als oder gleich 60 g/Liter aufweist.

5. Recyclingverfahren nach einem der Ansprüche 1 bis 4, **dadurch gekennzeichnet, dass** die Fraktion B, eventuell die Fraktion B', eine Konzentration an Chloridionen von weniger als oder gleich 60 g/Liter, vorzugsweise von mehr als oder gleich 10 g/Liter aufweist.

6. Recyclingverfahren nach einem der Ansprüche 1 bis 5, **dadurch gekennzeichnet, dass** vor dem Schritt des Überführens der Chloridionen durch Elektrodialyse iii) oder iv) die Fraktion A und eventuell die Fraktion B oder die Fraktionen B und B', welche Chloridionen und Farbstoffe umfassen, einem Schritt einer Nanofiltration unterzogen wird (werden), um ein Nanofiltrationspermeat (PA1), eventuell (PB1) oder (PB1) und (PB'1) und ein Nanofiltrationsretentat (RA1) der Fraktion A, eventuell ein Nanofiltrationsretentat (RB1) oder (RB1) und (RB'1) zu bilden.

7. Recyclingverfahren nach Anspruch 6, **dadurch gekennzeichnet, dass** die einem Nanofiltrationsschritt unterzogene Fraktion B das Nanofiltrationsretentat RA1 der Fraktion A, eventuell in Mischung mit einer oder mehreren Fraktionen aus dem Regenerationsabfluss mit einer Chloridionen-Konzentration von mehr als 0 g/l umfasst, einem Schritt einer Umkehrosmose unterzogen wird, um ein Osmoseretentat (RA3) oder (RB3) mit einer Chloridionen-Konzentration (g/l), die höher als die Chloridionen-Konzentration (g/l) des Diafiltrationspermeats (PA2) oder (PB2) ist, eventuell in Mischung mit einer oder mehreren Fraktionen aus dem Regenerationsabfluss mit einer Chloridionen-Konzentration von mehr als 0 g/l, zu erzeugen.

8. Recyclingverfahren nach Anspruch 6, **dadurch gekennzeichnet, dass** vor dem Schritt des Überführens der Chloridionen durch Elektrodialyse iii) oder iv) das Nanofiltrationsretentat (RA1) der Fraktion A, oder (RB1) der Fraktion B, einem Schritt einer Diafiltration unterzogen wird, umfassend wenigstens ein Waschen mit einer eventuell Chloridionen umfassenden wässrigen Lösung, während es über die beim Nanofiltrationsschritt verwendete Membran läuft, um ein Diafiltrationspermeat (PA2) oder (PB2) und ein Diafiltrationsretentat (RA2) oder (RB2) zu bilden.

9. Recyclingverfahren nach Anspruch 6, **dadurch gekennzeichnet, dass** das Nanofiltrationspermeat (PB1) der Fraktion B, eventuell das Nanofiltrationspermeat (PB'1) der Fraktion B', einem Schritt einer Umkehrosmose unterzogen wird, um ein Umkehrosmoseretentat (RB2), eventuell (RB'2), mit einer Chloridionen-Konzentration (g/l), die höher als die Chloridionen-Konzentration (g/l) des Nanofiltrationspermeats (PB1) der Fraktion B, eventuell des Nanofiltrationspermeats (PB'1) ist, zu erzeugen.

10. Recyclingverfahren nach Anspruch 8, **dadurch gekennzeichnet, dass** das Diafiltrationspermeat (PA2) oder (PB2), eventuell in Mischung mit einer oder mehreren Fraktionen, die direkt aus dem Regenerationsabfluss hervorgegangen sind, mit einer Chloridionen-Konzentration > 0 g/l, einem Schritt einer Umkehrosmose unterzogen wird, um ein Osmoseretentat (RA3) oder (RB3) mit einer Chloridionen-Konzentration (g/l), die höher als die Chloridionen-Konzentration (g/l) des Diafiltrationspermeats (PA2) oder (PB2) ist, eventuell in Mischung mit der oder den Fraktionen, zu erzeugen.

11. Recyclingverfahren nach dem einen oder dem anderen der Ansprüche 9 und 10, **dadurch gekennzeichnet, dass** die Fraktion A und die Fraktion B bei Schritt iii) des Überführens der Chloridionen durch Elektrodialyse das Nanofiltrationspermeat (PA1) aus der Fraktion A bzw. das Umkehrosmoseretentat (RB2) oder (RB3) aus der Fraktion B oder (RA3) der Fraktion A umfassen.

12. Recyclingverfahren nach dem einen oder dem anderen der Ansprüche 6 und 9, **dadurch gekennzeichnet, dass** die Fraktion A das Nanofiltrationspermeat (PA1) der Fraktion A umfasst, die Fraktion B und die Fraktion B' entweder die Nanofiltrationspermeate (PB1, PB'1) aus den Fraktionen B bzw. B' oder die Umkehrosmoseretentate (RB2, RB'2) aus den Fraktionen B bzw. B' umfassen.

13. Recyclingverfahren nach Anspruch 8, **dadurch gekennzeichnet, dass** die bei dem Diafiltrationsschritt verwendete wässrige Lösung umfasst:
- eine oder mehrere Fraktionen des Regenerationsabflusses mit einer Chloridionen-Konzentration (g/l) geringer, vorzugsweise um wenigstens 300 %, als die Chloridionen-Konzentration des Nanofiltrationsretentats (RA1) der Fraktion A, und/oder
- die Fraktion B und/oder B'.

14. Recyclingverfahren nach einem der Ansprüche 1 bis 13, **dadurch gekennzeichnet, dass** die Fraktion B, die dem Schritt des Überführens iii) der Chloridionen durch Elektrodialyse unterzogen wurde, einem Schritt einer Umkehrosmose unterzogen wird, um Wasser zurückzugewinnen.

15. Recyclingverfahren nach einem der Ansprüche 1 bis 14, **dadurch gekennzeichnet, dass** die Fraktionen B und B' bei Schritt ii) zwei Fraktionen sind, die aus dem gleichen Umkehrosmoseretentat (RF1) einer Ausgangsfraktion F aus dem Regenerationsabfluss, mit einer Konzentration (f) an Chloridionen (g/l), hervorgegangen sind.

## Claims

1. A method for recirculating a reprocessing effluent comprising chloride ions from an ion exchange resin comprising the following steps:
(i) providing a reprocessing effluent comprising chloride ions;
(ii) selecting fractions A, B, and optionally B', directly from said reprocessing effluent or after one or several steps for modifying the chloride ion concentration, having concentrations of chloride ions (g/l) of respectively (a), (b) and (b') > 0 g/l, with (a) > (b);
(iii) transferring by electrodialysis the chloride ions of the fraction B to the fraction A in order to obtain a fraction C having a chloride ion concentration (c) greater than (a); or
(iv) transferring by electrodialysis the chloride ions of the fraction B to the fraction B', in order to obtain a fraction B" having a chloride ion concentration (b") greater than (b') and then mixing the fractions B" and A in order to obtain a fraction C having a chloride ion concentration (c) greater than (a);
(v) optionally adding fresh brine to the fraction C in order to form a solution of reprocessing brine.

2. The recirculation method according to claim 1, **characterized in that** (a) is of the order of 1.30 to 10 times (b) or (b').

3. The method for recirculating a reprocessing effluent comprising chloride ions from an ion exchange resin, preferably anionic resin, for discoloration of a colored sweetened solution according to either one of claims 1 and 2, **characterized in that** the reprocessing effluent comprises coloring agents, notably polyphenols.

4. The recirculation method according to any one of claims 1 to 3, **characterized in that** the fraction A comprises a concentration of chloride ions greater than or equal to 40 g/liter, preferably greater than or equal to 60 g/liter.

5. The recirculation method according to any one of claims 1 to 4, **characterized in that** the fraction B, optionally the fraction B', comprises a concentration of chloride ions of less than or equal to 60 g/liter, preferably greater than or equal to 10 g/liter.

6. The recirculation method according to any one of claims 1 to 5, **characterized in that** before the step for transferring the chloride ions by electrodialysis iii) or iv), the fraction A, and optionally the fraction B or the fractions B and B', comprising chloride ions and coloring agents, undergo(es) a nanofiltration step in order to form a nanofiltration permeate (PA1), optionally (PB1) or (PB1) and (PB'1), and a nanofiltration retentate (RA1) of fraction A, optionally a nanofiltration retentate (RB1) or (RB1) and (RB'1).

7. The recirculation method according to claim 6, **characterized in that** the fraction B subject to a nanofiltration step comprises the nanofiltration retentate RA1 of the fraction A, optionally in a mixture with one or several fractions from the reprocessing effluent having a chloride ion concentration greater than 0 g/l, undergoes a reverse osmosis step so as to produce an osmosis retentate (RA3) or (RB3) having a chloride ion concentration (g/l) greater than the concentration of chloride ions (g/l) of said diafiltration permeate (PA2) or (PB2), optionally in a mixture with one or several fractions from the reprocessing effluent having a chloride ion concentration greater than 0 g/l.

8. The recirculation method according to claim 6, **characterized in that** before the step for transferring the chloride ions by electrodialysis iii) or iv), the nanofiltration retentate (RA1) of the fraction A, or (RB1) of the fraction B, undergoes a diafiltration step comprising at least one washing with an aqueous solution, optionally comprising chloride ions, during its passing over the membrane used in the nanofiltration step for forming a diafiltration permeate (PA2) or (PB2) and a diafiltration retentate (RA2) or (RB2).

9. The recirculation method according to claim 6, **characterized in that** the nano-filtration permeate (PB1) of the fraction B, optionally the nanofiltration permeate (PB'1) of the fraction B', undergoes a reverse osmosis step so as to produce a reverse osmosis retentate (RB2), optionally (RB'2), having a concentration of chloride ions (g/l) greater than the chloride ion concentration (g/l) of said nanofiltration permeate (PB1) of the fraction B, optionally of said nanofiltration permeate (PB'1).

10. The recirculation method according to claim 8, **characterized in that** the diafiltration permeate (PA2) or (PB2), optionally in a mixture with one or several fractions directly from said reprocessing effluent having a concentration chloride ions > 0 g/l, undergoes a reverse osmosis step so as to produce an osmosis retentate (RA3) or (RB3) having a concentration of chloride ions (g/l) greater than the concentration of chloride ions (g/l) of said diafiltration permeate (PA2) or (PB2), optionally in a mixture with said fraction(s).

11. The recirculation method according to either one of claims 9 and 10, **characterized in that** the fraction A and the fraction B in step iii) for transferring chloride ions by electrodialysis respectively comprise the nanofiltration permeate (PA1) from fraction A, and the reverse osmosis retentate (RB2) or (RB3) from fraction B or (RA3) from fraction A.

12. The recirculation method according to either one of claims 6 and 9, **characterized in that** the fraction A comprises the nanofiltration permeate (PA1) of the fraction A; the fraction B and the fraction B' respectively comprise either the nanofiltration permeates (PB1, PB'1) from the fractions B and B', or the reverse osmosis retentate (RB2, RB'2) from the fractions B and B'.

13. The recirculation method according to claim 8, **characterized in that** the aqueous solution used in the diafiltration step comprises:
- one or several fractions of the reprocessing effluent having a concentration of chloride ions (g/l) of less, preferably by at least 300%, than the concentration of chloride ions of the nanofiltration retentate (RA1) of fraction A, and/or
- the fraction B and/or B'.

14. The recirculation method according to any one of claims 1 to 13, **characterized in that** the fraction B having undergone the step iii) for transferring chloride ions by electrodialysis undergoes a reverse osmosis step so as to recover water.

15. The recirculation method according to any one of claims 1 to 14, **characterized in that** the fractions B and B' in step ii) are two fractions from the same reverse osmosis retentate (RF1) of an initial fraction F from said reprocessing effluent, of a concentration (f) of chloride ions (g/l).
